# EUROPÄISCHE PATENTANMELDUNG

(11) **EP 1 006 294 A1**
(43) Veröffentlichungstag der Anmeldung: **07.06.2000**
(21) Anmeldenummer: 99250427.4
(22) Anmeldetag: 01.12.1999
(51) Int. Cl.: F16H 7/08

(54) **Spann- und Dämpfungselement für Endloskettentriebe**

(30) Priorität: 01.12.1998 DE 19855376
(71) Anmelder: EBERT Kettenspanntechnik GmbH, 04509 Freiroda (DE)
(72) Erfinder: Ebert, Siegfried, 04509 Freiroda (DE)

(57) **Zusammenfassung**

Die Erfindung betrifft eine Spann- und Dämpfungselement für Endloskettentriebe.

Der Mangel des bekannten Spann- und Dämpfungselementes besteht darin, daß es zwischen den Trumen der Kette und in Reihe mit den Kettenrädern angeordnet ist und einen Arbeitsraum zwischen den Kettenrädern benötigt, welcher mindestens so groß wie die Exzentrizität des Spann- und Dämpfungselementes, gemessen über die außenliegende Mantelfläche, sein muß, um die Kollission mit den Kettenrädern vermeiden.

Dadurch wird der minimale Achsabstand der Kettenräder begrenzt.

Das Problem wird gelöst durch ein Spann- und Dämpfungselement (7) mit gewölbten seitlichen Lagesicherungsflächen (8a, 8b).
Mit seiner Breite B1 über die Lagesicherungsflächen paßt das Spann- und Dämpfungselement in mittig der Kettenräder (5, 6) angebrachte Nuten.
Im Zusammenwirken mit der an den rotierende Nutenwänden haftenden Schmierflüssigkeit wird das Spann- und Dämpfungselement in den Nuten durch hydrodynamische Kräfte schwimmend geführt, ohne in Kontakt mit den Nutenwänden zu kommen.

Die Erfinding ist anwendbar im Maschinenbau, insbesondere im Fahrzeugbau.

## Beschreibung

Die Erfindung betrifft ein Spann- und Dämpfungselement für Endloskettentriebe.
Sie ist anwendbar in Verbrennungsmotoren, insbesondere in Steuerkettentrieben mit kleinem Achsabstand der Kettenräder.

Aus dem EP 0 651 864 B1 ist ein selbsttätiges Spann- und Dämpfungselement bekannt.
Dabei handelt es sich um einen Ring aus einem elastischen Werkstoff, welcher zwischen der konzentrischen Form im ungespannten Zustand und der Form einer Cassinischen Kurve mit ellipsenähnlicher Gestalt im gespannten Zustand verformbar ist.
Dieses Spann- und Dämpfungselement wird zwischen Lostrum und Lasttrum des Kettentriebes angeordnet und wirkt auf beide Trume gleichzeitig.
Während des Betriebszustandes nimmt es selbsteinstellend zum Spannkraftminimum im Bereich der durch das Spannen erzeugten Lostrumauslenkung, zugleich der Bereich des größten diametralen Trumabstandes, gleitend eine Lage ein, in der es kein Kettenrad berührt.
Durch seine zum Profil der Kette mit Führungsspiel passende umlaufende Mantelfläche und durch seine Seitenflächen ist dieses Spann- und Dämpfungselement gleitführend im Profil der Kette. Es sichert somit seine seitliche Lage zwischen den Trumen des Kettentriebes. Damit ist es zwischen den Achsen der Kettenräder in der Lostrumauslenkung und zugleich in der Ebene der Kettenspur lagegesichert.

Ferner ist aus der WO 97/10 453 eine Spannvorrichtung für Antriebsriemen bekannt.
Dabei handelt es sich um einen elastisch biegsamen Ring.
Diese Spannvorrichtung ist zwischen den Trumen des Riementriebes und in der Ebene des Riementriebes zwischen den Riemenscheiben oder um die Achse einer der Riemenscheiben angeordnet.
Die Lagesicherung in der Ebene eines Zahnriementriebes erfolgt bei Anordnung der Spannvorrichtung zwischen Zahnriemenscheiben durch den Eingriff seiner außenliegenden Zähne in den Zahnriemen, gekoppelt mit einer oder mehreren Nuten, welche zum einfach- oder mehrfach keilförmigen Profil des Antriebsriemens passend sind und im Eingriff zu diesem Profil sind.
Bei Anordnung um die Achse einer der Riemenscheiben erfolgt die Lagesicherung in der Ebene des Riementriebes durch den Führungskontakt mit einer umlaufenden Nut in einer der Riemenscheiben.

Das Spann- und Dämpfungselement nach EP 0 651 864 B1 hat den Nachteil, daß es zwischen den Kettenrädern einen Arbeitsraum benötigt, welcher mindestens so groß sein muß, wie die maximale Exzentrizität des Spann- und Dämpfungselementes bei maximaler ellipsenähnlicher Verformung.
Wird dieser Arbeitsraum nicht eingehalten, kommt es zur Kollision zwischen Spann- und Dämpfungselement und Kettenrädern und zur Zerstörung seiner Mantelfläche.

Die Spannvorrichtung nach WO 97/10 453 hat, sofern es zwischen den Riemenscheiben angeordnet ist, den Nachteil, daß es zwischen den Riemenscheiben einen Arbeitsraum benötigt, welcher mindestens so groß sein muß, wie die maximale Exzentrizität bei maximaler ellipsenähnlicher Verformung.
Wird dieser Arbeitsraum nicht eingehalten, kommt es zur Kollision zwischen Spannvorrichtung und Riemenscheiben.

Bei Anordnung der Spannvorrichtung um die Achse einer der Riemenscheiben besteht der Nachteil einer durch die Riemenscheibe vermittelten Rotation, welche den Verschleiß durch

Biegewechsel erhöht und bei höheren Drehzahlen eine unerwünschte Erwärmung durch Verformungs-Verlustarbeit bewirkt.
Die technische Ursache dieses Nachteils besteht darin, daß die Lagesicherung in der Antriebsebene sowohl bei dem Spann- und Dämpfüngselement als auch bei der Spannvorrichtung vollständig in Reihenanordnung zu den Kettenrädern beziehungsweise Riemenscheiben erfolgt oder bei Anordnung der Spannvorrichtung um die Achse einer der Riemenscheiben nicht an dem die Drehbewegung vermittelnden Kontakt mit der umlaufenden Nut gehindert wird.

Ziel der Erfindung ist ein Spann- und Dämpfungselement für Kettentriebe mit kleinem Achsabstand der Kettenräder.
Die technische Aufgabe der Erfindung besteht in der Schaffung eines Spann- und Dämpfungselementes, welches in der Ebene des Kettentriebes zwischen Lostrum und Lasttrum der Kette in Ineinanderanordnung zu den Kettenrädern angeordnet ist.

Die technische Aufgabe wird durch die kennzeichnenden Merkmale des Anspruches 1 gelöst.

Dabei wird von einem ringförmigen selbsttätigen Spann- und Dämpfungselement im ungespannten Zustand ausgegangen.
Dieses Element weist über den gesamten Ringumfang eine homogene Biegesteifigkeit und Dämpfung auf.
Gemäß der Erfindung weist das Spann- und Dämpfüngselement eine Breite auf, welche kleiner ist als die Breite der Nut, wodurch es kontaktfrei in die Nut zwischen den Zahnreihen mehrreihiger Kettenräder paßt.
Die innere Weite der Kette wird von den Kettenrädern und vom Spann- und Dämpfungselement durch differenzierten Eingriff genutzt.
Die Kettenräder greifen jeweils unmittelbar neben den Kettenlaschen in die Kette ein, während das von der Nut geführte Spann- und Dämpfungselement in dem nicht durch den Kettenradeingriff kontaktierten Bereich der Kette mittig gelagert ist.

Das Spann- und Dämpfungselement hat eine zu den Rollen oder den Buchsen der Kette
gleitfähige Mantelfläche und stirnseitig gegenüberliegende Lagesicherungsflächen.
Damit ist das erfindungsgemäße Spann- und Dämpfungselement in der Kettentriebebene führungs- und eindringfähig in den von den Nuten zwischen den Zahnreihen der Kettenräder gebildeten zusätzlichen Arbeitsraum.
Die Nuten zwischen den Zahnreihen in den Kettenrädern sind jeweils rotationssymmetrisch.
Sie bilden damit einen zwischen den Kettenradachsen als auch um die Kettenradachsen nutzbaren Arbeitsraum, in welchen das Spann- und Dämpfungselement seitlich führungsfähig ist.
Damit ist der in der Kettentriebebene nutzbare Arbeitsraum um die Summe der Nuttiefen beider Kettenräder stets größer als der Arbeitsraum zwischen den Kopfkreisen der gegenüberliegenden Kettenräder.
Der Vorteil des erfindungsgemäßen Spann- und Dämpfungselementes besteht darin, daß die Funktion 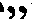 Selbsttätige Lagesicherung im Kettentrieb" aufgeteilt ist in die Teilfunktionen 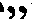 Selbsttätige Lagesicherung zur Abstandsmitte der Kettenräder in der Lostrumauslenkung der Kette" und 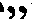 Selbsttätige Lagesicherung in der Kettentriebebene in den Nuten der

Während in der bekannten Weise die Lagesicherung des Spann- und Dämpfüngselementes im Bereich der Abstandsmitte der Kettenräder durch die Lostrumauslenkung im Zusammenwirken mit der Spannkraft selbsteinstellend erfolgt, erfolgt die Lagesicherung in der Kettentriebebene vorteilhafterweise unter Nutzung der an den rotierenden Nutwänden haftenden Schmierflüssigkeit.
Die Relativbewegung zwischen den gegenüberliegenden Lagesicherungsflächen und den rotierenden planen Flächen der Nuten bewirkt zusammen mit der überschüssigen Schmierflüssigkeit zwischen den Nutwänden und den Lagesicherungsflächen eine hydrodynamische, abstandserzeugende Kraft, welche den Kontakt mit den Nutwänden verhindert. Das Spann- und Dämpfungselement ist dadurch schwimmend von den Nutwänden distanziert.
Zwecks Verstärkung des hydrodynamischen Effektes sind die Lagesicherungsflächen des erfindungsgemäßen Spann- und Dämpfungselementes beidseitig gewölbt oder beidseitig mit gerundeten oder gefasten Einströmflächen versehen.
Die Wölbungen, Rundungen oder Fasen der gegenüberliegenden Lagesicherungsflächen sind symmetrisch und damit bezüglich der abstandserzeugenden Kraft, welche den Kontakt mit den Nutwänden verhindert, hydraulisch-dynamisch äquivalent ausgeführt.

Das führt zu einem selbsteinstellenden und abstandsgleichen hydraulischen Spalt zwischen den Nutwänden und den Lagesicherungsflächen.
Es gibt keinen Kontakt des Spann- und Dämpfungselementes zu den rotierenden Kettenrädern.
Gleitreibungsverschleiß der Lagesicherungsflächen ist als nachteiliger Faktor ausgeschlossen.

Das Spann- und Dämpfungselement ist unabhängig von der Drehrichtung und von der Lage des Kettentriebes.
Damit ist es geeignet, auch gegen negativ gerichtete Beschleunigungen der Kette zu reagieren, wie sie z.B. als Überholstöße in den Steuerketten von Nockenwellenantrieben von Brennkraftmaschinen infolge eines Startabbruches oder infolge von Ventilfederkräften in den Phasen der Ablaufflanken der Nocken auftreten können.

Das Spann- und Dämpfüngselement kann, bezogen auf die Achsen der Kettenräder, sowohl zwischen den Achsen als auch um die Achsen herum angeordnet werden. Das ermöglicht sehr kleine Achsabstände der Kettenräder und insgesamt eine günstige Variabilität bei der konstruktiven Gestaltung des Spann- und Dämpfungselementes und des Kettentriebes.

Durch die elastischen, visko-elastischen und plastischen Verformungsanteile des Kunststoffes strebt das Spann- und Dämpfungselement seine spannungsfreie Kreisform an.
Damit lenkt es bis zum Erreichen des eigenen spannungsfreien Zustandes den Lostrum der Kette auf einen maximalen Abstand zum Lasttrum, gemessen über die Rollen oder Buchsen, aus, welcher diesem Kreisdurchmesser gleich ist.

Die Montage des Spann- und Dämpfungselementes erfolgt im vorgespannten Zustand zwischen die Trume der Kette und in der Abstandsmitte der Kettenräder durch einfaches Einrasten in die Kette und die Nuten.

Die Erfindung eignet sich besonders für den Einsatz in überschußgeschmierten Steuerkettentrieben von Verbrennungsmotoren mit obenliegenden Nockenwellen.

Eine bevorzugte Ausgestaltung der Erfindung ist gekennzeichnet durch die Verwendung eines nach der Verformung zeit- und/oder temperaturabhängig rückverformenden Kunststoffes.

Diese Eigenschaft ist von Kunststoffen mit visko-elastischer Rückverformung oder mit Memory-Rückverformung bekannt.
Diese Regenerierungsfähigkeit bis in die Nähe der ursprünglichen Kreisform des Spann- und Dämpfungselementes im spannungsfreien Zustand bewirkt auch bei stehendem Kettentrieb eine gegen die Kettentrume wirkende Spannkraft.
Das macht die Keife in ihren Gelenken spielfrei und sichert die Spann- und Dämpfungswirkung im Stillstand und bereits in der Startphase des Motors, sobald die Kettenräder rotieren.
Ein bisher üblicher Aufbau hydraulischer Kräfte in den ersten Umdrehungen von Motor und Ölpumpe während des Startens entfällt.

Die Erfindung soll nachstehend an einem Ausführungsbeispiel näher erläutert werden:
Figur 1 zeigt eine schematische Seitenansicht eines Kettentriebes mit Spann- und Dämpfungselement.

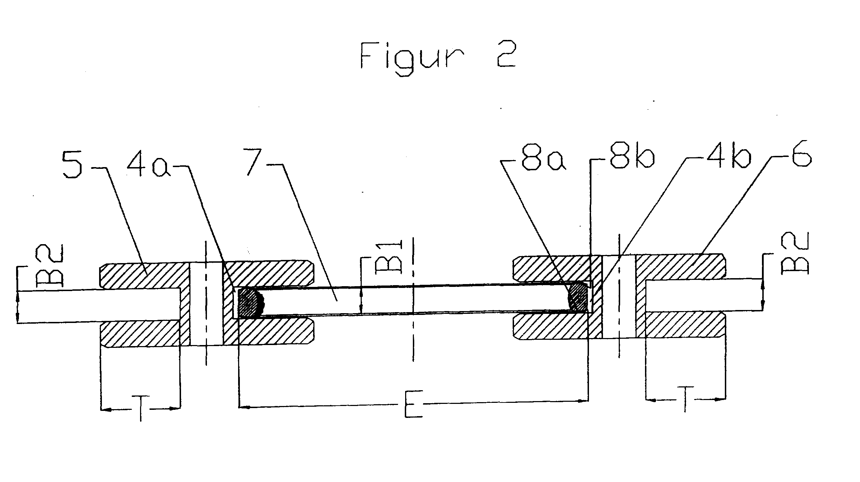

Figur 2 zeigt in Schnittdarstellung durch die waagerechte Achsenebene der Kettenräder die Anordnung des Spann- und Dämpfungselementes in den Kettenrädern gemäß des Kettentriebes aus Figur 1 (ohne Kette).

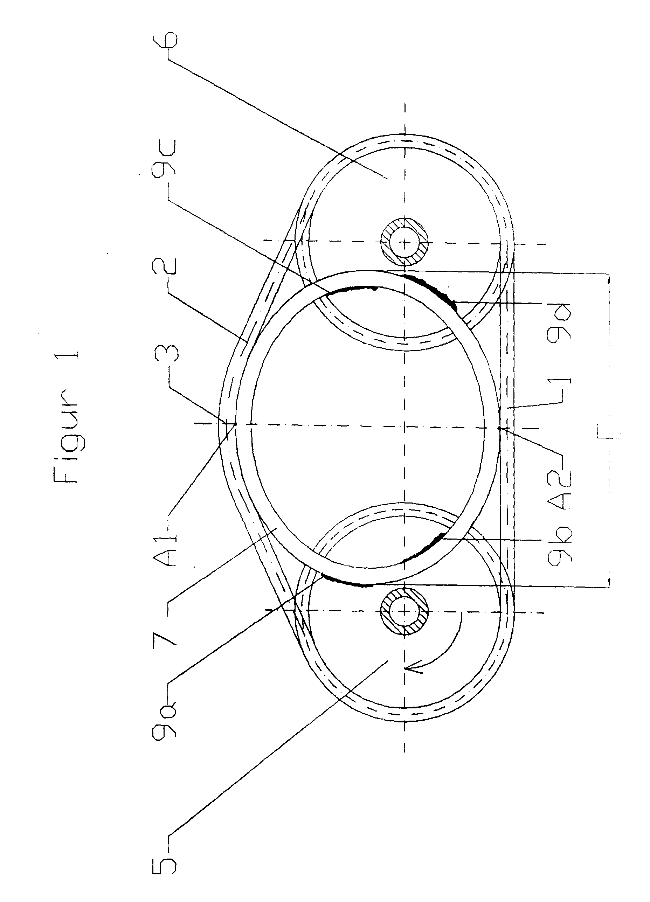

Figur 1 zeigt ein zwischen Lasttrum 1 und Lostrum 2 eines rechtsdrehenden Rollenkettentriebes in der Lostrumauslenkung 3 einer einreihigen Rollenkeife und in den gegenüberliegenden Nuten 4a, 4b des einreihigen, mittig genuteten Kettenrades 5 und des einreihigen, mittig genuteten Kettenrades 6 lagegesichertes, von einer im ungespannten Zustand von einer konzentrischen Ringform ausgehendes, vorgespannt angeordnetes selbsttätiges Spann- und Dämpfungselement 7 mit in diesem Zustand ellipsenähnlicher Gestalt und der Exzentrizität E.
Das Spann- und Dämpfungselement paßt mit seiner Breite B₁ mit Führungsspiel und ohne unmittelbaren Kontakt in die gegenüberliegenden Nuten der Kettenräder.
Die Nuten in den Kettenrädern haben die Tiefe T und die Breite B₂, wobei B₂ > B₁ ist.

Das Spann- und Dämpfüngselement hat beidseitig symmetrische und nach außen gewölbte Lagesicherungsflächen 8a, 8b. Diese Lagesicherungsflächen sind umlaufend.
Das Element ist gleitfähig auf den Rollen der Kette durch seine ebene, umlaufende Mantelfläche am Außenumfang.
Der kleinste Abstand zwischen den auf der senkrechten Achse liegenden Punkten A₁, A₂ des selbsttätigen Spann- und Dämpfungselementes ist größer als der Durchmesser des größten Kettenrades des Kettentriebes.

Als Werkstoff für das Spann- und Dämpfungselement wurde ein Kunststoff mit viskoelastischen Eigenschaften verwendet.
Das Lasttrum zwischen dem treibenden Kettenrad und dem getriebenen Kettenrad verläuft gerade, während das Lostrum durch die Spannkraft des selbsttätigen Spann- und Dämpfungselementes eine bogenförmige Lostrumauslenkung aufweist. Die für die Lostrumauslenkung nutzbare Lostrumlänge wird durch den Lostrumdurchhang gewährleistet.

Die Spannkraft wird dadurch erzeugt, daß das Spann- und Dämpfungselement aus seiner ellipsenähnlichen Form elastisch die ursprüngliche, gleichmäßig runde Form des Ringes anstrebt.

Dabei bewirkt das Spann- und Dämpfungselement die Lostrumauslenkung bis die Kettengelenke des Lostrums spielfrei sind. In dieser Phase ist das Maximum der Lostrumauslenkung erreicht; der Abstand A₁, A₂ ist am größten. Es liegt das für das Spann- und Dämpfungselement im Kettentrieb erreichbare Spannkraftminimum vor.
Indem das Spann- und Dämpfungselement stets gleitend dieses Spannkraftminimum im größten Abstand A₁, A₂ anstrebt, entzieht es sich selbst in der Kette einen Freiheitsgrad und nimmt eine Lage in der Abstandsmitte der Kettenräder ein.

Der Kettentrieb arbeitet in überschüssiger Ölschmierung, wie sie üblicherweise durch Tauch- oder Druckumlaufschmierung in einem Getriebegehäuse erreicht wird. Das Schmiermittel gelangt infolge Verschleppung und Verwirbelung auch in die Nuten der Kettenräder.
Sobald sich die Kettenräder drehen, entstehen zwischen den Lagesicherungsflächen und den planen Wänden der Nuten an den Einlaufseiten Schmiermittelstaus 9a, 9b, 9c, 9d.

Diese Schmiermittelstaus bewirken zwischen den Lagesicherungsflächen und den Nutwänden jeweils eine hydrodynamische, abstandserzeugende Kraft, welche den Kontakt des Spann- und Dämpfungselementes mit den rotierenden Nutwänden verhindert.
Infolge der Symmetrie dieser Lagesicherungsflächen entstehen entgegengerichtete, gleichgroße hydrodynamische, abstandserzeugende Kräfte.

Das Spann- und Dämpfungselement wird schwimmend in der Mitte der Nuten gehalten.
Es kommt nicht zum Kontakt des Spann- und Dämpfungselementes zu den Nutwänden.
Dadurch wird der Reibungsverschleiß der Auftriebsflächen verhindert. Durch das Endringen in die Nuten beider Kettenräder ist das selbsttätige Spann- und Dämpfungselement in der Kettentriebebene allseitig lagegesichert.
Alle funktionellen elastischen, visko-elastischen und plastischen Verformungen des Spann- und Dämpfungselementes in der Kettentriebebene werden dadurch jedoch nicht beeinflußt.

Das beispielhaft gezeigte selbsttätige Spann- und Dämpfungselement ist rotationssymmetrisch und über seinen Umfang stofflich homogen.

## Patentansprüche

1. Ringförmiges Spann- und Dämpfungselement (7) für Endloskettentriebe, welches als elastisch, visko-elastisch und oder plastisch verformbares Element zwischen Lasttrum (1) und Lostrum (2) ständig auf beide Trume gleichzeitig wirkt und ellipsenähnlich verformt wird, sowie dabei in Ineinanderanordnung zu den mittig genuteten Kettenrädern (5, 6) angeordnet ist dadurch gekennzeichnet,
daß das Spann- und Dämpfungselement eine Breite B₁, welche kleiner ist als die Breite B₂ der mittig in die Kettenräder angebrachten Nuten (4a, 4b), und beidseitig gewölbte, über seinen Ringumfang hydraulisch-dynamisch äquivalente Lagesicherungsflächen (8a, 8b) aufweist.

2. Ringförmiges Spann- und Dämpfungselement nach Anspruch 1, gekennzeichnet durch gerundete oder gefaste Übergänge zwischen den Lagesicherungsflächen (8a, 8b) und innerer sowie äußerer Mantelfläche.
